(19) Europäisches Patentamt
European Patent Office
Office européen des brevets

(11) **EP 2 997 342 B1**

(12) **EUROPÄISCHE PATENTSCHRIFT**

(45) Veröffentlichungstag und Bekanntmachung des Hinweises auf die Patenterteilung:
**10.07.2019 Patentblatt 2019/28**

(21) Anmeldenummer: **14726104.4**

(22) Anmeldetag: **13.05.2014**

(51) Int Cl.:
*G01M 1/10* (2006.01)    *G01M 1/12* (2006.01)

(86) Internationale Anmeldenummer:
**PCT/EP2014/059790**

(87) Internationale Veröffentlichungsnummer:
**WO 2014/184204 (20.11.2014 Gazette 2014/47)**

(54) **SCHWEREPENDEL UND VERFAHREN ZUM BESTIMMEN EINES TRÄGHEITSMOMENTS**

GRAVITY PENDULUM AND METHOD FOR DETERMINING AN INERTIAL MOMENT

PENDULE PESANT ET METHODE POUR DETERMINER UN MOMENT D'INERTIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.05.2013 DE 102013208863**

(43) Veröffentlichungstag der Anmeldung:
**23.03.2016 Patentblatt 2016/12**

(73) Patentinhaber: **Resonic GmbH**
**12489 Berlin (DE)**

(72) Erfinder: **KLÖPPER, Robert**
**12489 Berlin (DE)**

(74) Vertreter: **Pfenning, Meinig & Partner mbB**
**Patent- und Rechtsanwälte**
**Joachimsthaler Straße 10-12**
**10719 Berlin (DE)**

(56) Entgegenhaltungen:
**EP-A1- 0 303 532     WO-A1-03/102528**
**DE-A1- 4 133 376     FR-A- 1 380 683**
**JP-A- H06 265 433    JP-A- 2011 053 206**
**US-A- 5 528 927**

• **BUYANOV E V: "A DEVICE FOR MEASURING THE INERTIA TENSOR OF A RIGID BODY", MEASUREMENT TECHNIQUES, CONSULTANTS BUREAU. NEW YORK, US, Bd. 34, Nr. 6, 1. Juni 1991 (1991-06-01), Seiten 585-589, XP000256693, ISSN: 0543-1972, DOI: 10.1007/BF00978771**

**Beschreibung**

Gegenstand der vorliegenden Anmeldung ist ein Adapter für ein Schwerkraftpendel in verschiedenen Ausführungen, eine Schwerependelhalterung für einen Adapter, sowie ein Schwerependelsystem mit einer Halterung und einem Adapter. Des Weiteren wird ein Verfahren zur Bestimmung von Trägheitsmomenten und Schwerpunkt mittels eines Schwerependelsystems offenbart.

Trägheitsmessungen zum Bestimmen der Trägheitseigenschaften eines Objekts mit einer räumlichen Massenverteilung (im Gegensatz zu Punktmassen) dienen der Simulation bzw. Vorhersage des dynamischen Verhaltens des Objekts wie z.B. einem Auto. Über die Bestimmung der Trägheitseigenschaften, wie Schwerpunkt sowie den Momenten (Trägheits- und/oder Deviationsmomente) des Trägheitstensors, können Aussagen über beispielsweise das Fahrverhalten eines PKWs getroffen werden. Im Stand der Technik sind zahlreiche industrielle Anwendungen zur Bestimmung der Trägheitseigenschaften bekannt.

Eines der im Stand der Technik bekannten Verfahren zur Bestimmung der Momente des Trägheitstensors oder des Schwerpunkts ist ein so genanntes Schwerependelverfahren. Dabei wird das zu vermessende Objekt bzw. der zu vermessende Schwerekörper entlang neun oder mehr verschiedener Achsen gependelt, wobei durch Messung der Eigenfrequenzen der Pendelschwingung die Trägheitseigenschaften des am Pendel angeordneten Objekts bestimmt werden können. Eines der Standardverfahren ist das Befestigen des zu vermessenden Körpers an einem Träger, welcher mit Messerlagern versehen ist, wobei die Messerlager an zwei Lagerhalterungen aufgehängt werden und so eine horizontale Pendelachse bilden. Die Messerlager liegen auf deren Messerscheide entlang einer Linie auf. Durch das Befestigen des Körpers an dem Träger in verschiedenen räumlichen Orientierungen wird nach und nach der Trägheitstensor bestimmt.

Eine weitere Variante eines Verfahrens aus dem Stand der Technik erlaubt es, einen Objektträger an verschiedenen Punkten aufzuhängen, so dass der an dem Träger befestigte, zu vermessende Körper an zwei unterschiedlichen, jedoch parallel zueinander verlaufenden Achsen gependelt wird. Hierdurch können bei gleicher Orientierung des zu vermessenden Körpers am Pendel zumindest ein Trägheitsmoment und eine Schwerpunktkoordinate des Objekts bestimmt werden.

Ein weiteres Verfahren ist aus der US 5 309 753 bekannt. Auch hier werden Messerlager verwendet und das Objekt durch Anordnung an verschiedenen Adapter vermessen. Obgleich im Stand der Technik zahlreiche weitere Verfahren bekannt sind, ist vielen Verfahren gemein, dass das Verändern der Pendelachsen sehr aufwendig ist und/oder aufwendige Mechanismen oder aufwendiges Umspannen in Handarbeit erfordert. Hierzu sei beispielsweise auf die DE 29 62 2132 U1 verwiesen.

Weitere Schwerependel sind aus der EP 0 303 523 A1, DE 4133 376 A1 sowie aus BUYANOV: "A device for measuring the inertia tensor of a rigid body", measurement techniques, Band 34, Nr. 6, 1. Juni 1991, Seiten 585 - 589 bekannt.

Aufgabe der vorliegenden Erfindung ist es daher, Vorrichtungen zur Verfügung zu stellen, welche die Bestimmung von Trägheitseigenschaften vereinfachen. Dies wird mit einer Vorrichtung nach Anspruch 1 und einem Verfahren nach Anspruch 12 gelöst.

In einem ersten Aspekt der nicht Teil der Erfindung ist, handelt es sich um einen Adapter für ein Schwerkraftpendel, wobei der Adapter einen Träger zur Befestigung eines zu vermessenden Schwerekörpers und mindestens zwei, vorzugsweise drei, besonders vorzugsweise mehr als drei am Träger angeordnete Auflagekörper umfasst.

In einer Variante sind die mindestens zwei Auflagekörper derart ausgebildet, dass der Adapter in mindestens zwei verschiedenen Orientierungen an einer Pendelhalterung angeordnet werden kann, wobei sich die Auflagefläche in den mindestens zwei verschiedenen Orientierungen im Wesentlichen vorzugsweise gleich ist.

Dadurch, dass der Adapter auf einer Halterung für den Adapter für ein Schwerkraftpendel entlang zweier nicht parallel zueinander verlaufender Pendelachsen gehalten werden kann, wird verhindert, dass sich die Auflagefläche der Pendelachse unter zwei unterschiedlichen Raumorientierungen, d.h. der unterschiedlichen Rotations- bzw. Pendelachsen ändert.

Im Wesentlichen sind zwei unterschiedliche Ausführungsvarianten für die Auflagekörper denkbar. In einer ersten Ausführungsvariante umfassen die Auflagekörper einen spitz zulaufenden Polyederabschnitt oder Kegelabschnitt, wobei eine Spitze des Polyederabschnitts oder Kegelabschnitts einen Auflagepunkt des Auflagekörpers bildet. In dieser Ausführungsvariante pendelt der Adapter lediglich auf zwei Spitzen des Polyederabschnitts des Auflagekörpers. Diese Variante hat den Vorteil einer sehr geringen Auflagefläche, welche auch beispielsweise unter Neigung des Adapters keine Änderung erfährt. Allerdings ist in dieser Variante die Flächenpressung auf der Auflagefläche sehr hoch, so dass es vergleichsweise zügig zu Beschädigungen der Auflagekörper oder der Auflageflächen kommen kann.

In einer zweiten Ausführungsvariante umfassen die mindestens zwei Auflagekörper Ellipsoidkalotten, vorzugsweise den Spezialfall der Kugelkalotten als Ellipsoidkalotte. Bei Ellipsoid- bzw. Kugelkalotten, insbesondere bei Ellipsoidkalotten, welche für die mindestens zwei Auflagekörper dieselben Krümmungsradien aufweisen, führt die Ausgestaltung der Auflagekörper dazu, dass auch diese theoretisch lediglich an einem Punkt aufliegen. Allerdings ist die Ellipsoid oder Kugelgeometrie vorteilhaft, da so die Flächenpressung gering gehalten wird und die Symmetrie des Ellipsoids oder der Kugel bewirkt, dass diese auch unter anderen Raumorientierungen des Adapters im Wesentlichen mit der gleichen Fläche auf einer Auflagefläche zum Liegen kommen. Ein Vorteil von Kugelkalotten ist eine unabhängig von der Orientierung der Kugelkalotte auf der Auflagefläche wirkende konstante Flächenpressung. Dieser Effekt ist auch bereits bei Ellipsoidkalotten zu beobachten, wobei die Flächenpressung dann nicht vollständig unabhängig von der Orientierung ist. Ein weiterer Vorteil der Ellipsoid- oder Kugelkalotten ist die einfache Herstellung und gute Verfügbarkeit. Ein Fluchten der Lager wie dies bei Messerlagern der Fall ist, ist nicht notwendig, so dass die Herstellung des Adapters vereinfacht wird. Gegenüber Messerlagern weisen die Ellipsoid- oder Kugelkalotten den weiteren Vorteil auf, dass eine Kugelkalotte um mehrere Achsen pendelbar ist und auf diese Weise keine Vielzahl von unterschiedlich orientierten Auflageflächen zur Verfügung gestellt werden muss. Die Auflageflächen können jeweils horizontal ausgerichtet und auf unterschiedlichen Höhen angeordnet sein.

Ein weiterer Aspekt der nicht Teil der Erfindung ist, ist ein Adapter für ein Schwerkraftpendel, wobei der Adapter einen Träger zur Befestigung eines zu vermessenden Schwerekörpers und mindestens zwei am Träger angeordnete Auflagekörper umfasst, wobei die mindestens zwei Auflagekörper Aufnahmevorrichtungen zur Aufnahme von Ellipsoidkalotten aufweisen. Bei diesem Aspekt können die Auflageflächen einer Halterung beispielsweise Ellipsoid- oder Kugelkalotten aufweisen, auf denen der Adapter gelagert ist. Dieser Fall ist analog zu dem Fall, dass der Adapter ellipsoidkalottenförmige Auflagekörper umfasst, d.h., dass bei unterschiedlichen Orientierungen des Adapters dieser mit einer vergleichbaren Fläche auf der Auflagefläche aufliegt.

Ein weiterer Aspekt der nicht Teil der Erfindung ist, betrifft eine Schwerependelhalterung für einen Adapter, wie in den ersten beiden Aspekten beschrieben, wobei die Schwerependelhalterung einen Halteträger und mindestens zwei Auflageflächen umfasst, wobei entweder zwischen den zwei Auflagefläche eine keilförmige Ausnehmung vorhanden ist oder dass die Auflageflächen derart zueinander angeordnet sind oder anordnenbar sind, dass sich die Entfernung der Auflageflächen zueinander in einer Raumrichtung vorzugsweise stetig ändert.

Hierdurch wird bewirkt, dass durch Verstellen der Auflageflächen im Raum verschiedene kürzeste Verbindungslinien zwischen den Auflageflächen einstellbar sind. Haben die Auflagekörper des Adapters in den verschiedenen Orientierungen (d.h. den unterschiedlichen Pendelachsen) einen zueinander unterschiedlichen Abstand, dann können Auflagepunkte auf den Auflageflächen identifiziert werden, welche ein freies Schwingen des Adapters (vorzugsweise mit dem daran befestigten Objekt) zwischen den Auflageflächen ermöglicht. Die Verbindungslinien entsprechen im Wesentlichen den späteren Pendelachsen, um die ein an einem Adapter befestigtes Objekt pendelt, um die Trägheitsmomente des Objekts zu ermitteln.

Ein weiterer Aspekt der nicht Teil der Erfindung ist, umfasst eine Halterung und einen Adapter, wobei die Halterung einen Halteträger und mindestens zwei Auflageflächen und der Adapter mindestens einen Träger zur Befestigung eines zu vermessenden Schwerekörpers und mindestens zwei am Träger angeordnete Auflagekörper umfasst, wobei die Auflageflächen oder die Auflagekörper derart ausgebildet sind, dass in einer Variante jeweils eine Auflagefläche und der dazu korrespondierende Auflagekörper einander "punktweise" (Im Falle eines Polyeders auf den Auflageflächen oder Auflagekörpern) berühren. Analog zu den ersten drei Aspekten dieser Anmeldung, alternativ zu der punktweisen Berührung kann beispielsweise entweder der Auflagekörper oder die Auflagefläche eine Ellipsoidkalotte aufweisen. Hierbei ist es vorteilhaft wenn sämtliche Auflageflächen bzw. sämtliche Auflagekörper identische Ellipsoidkalotten aufweisen. In einer Ausführungsform ist die Kugel- bzw. Ellipsoidkalotte dabei derart ausgeführt, dass diese mehr als die Hälfte eines analogen Kugel- bzw. Ellipsoidvolumens mit gleichen Achsenlängen umfasst. Dies vereinfacht die Handhabung des Adapters mit einer Halterung. Vorzugsweise umfasst die Kugel- bzw. Ellipsoidkalotte mehr als 60%, mehr als 70%, mehr als 80% oder mehr als 90% des analogen Kugel- bzw. Ellipsoidvolumens. An dieser Stelle sei darauf hingewiesen, dass in der vorliegenden Anmeldung unter dem Begriff der Kugelkalotte auch Kugelscheiben subsumiert werden, das heißt, der Auflagekörper kann an einer dem Träger abgewandten Seite ebenfalls stumpf sein. Dabei müssen die zwei Begrenzungsflächen der Kugelscheibe, zwischen welchen der Kugelmantel verläuft, nicht zueinander parallel sein, können dies aber sein. Für das Volumen der Kugelscheibe (bzw. analog dazu der Ellipsoidscheibe) gilt das für die Kugelkalotte beschriebene Volumenverhältnis zur Vollkugel. Eine Besonderheit stellt der Kugelring dar, welche lediglich eine Mantelfläche der Kugelfläche umfasst. In diesem Sinne kann der erste Aspekt der Erfindung auch dahingehend beschrieben werden, dass der Auflagekörper eine Mantelfläche umfasst, welche einem Abschnitt einer Mantelfläche eines Ellipsoids oder einer Kugel entspricht. Somit bilden Kugelkalotten im Sinne der vorliegenden Anmeldung eine Untermenge von Kugelzapfen gemäß DIN 71803, können jedoch auch derart ausgebildet sein, dass diese nicht unter diese Norm fallen.

Die Erfindung betrifft ein Schwerependel mit einer Halterung und einem Adapter, welcher mindestens einen Träger zur Befestigung eines zu vermessenden Schwerekörpers umfasst, wobei die Halterung derart mit dem Adapter verbunden ist, dass der Adapter um eine Pendelachse pendelbar ist. Bei diesem Aspekt der Erfindung ist der Adapter derart ausgestaltet, dass der Adapter um mindestens eine, nicht horizontal und nicht vertikal verlaufende Pendelachse gependelt werden kann.

Ein weiterer Aspekt der Erfindung betrifft ein Verfahren zur Bestimmung eines Trägheitsmoments mittels eines Schwerependels mit einer Halterung und einem Adapter, welcher mindestens einen Träger und mindestens zwei Auflagekörper umfasst, wobei der Adapter nacheinander um mindestens zwei, nicht parallel zueinander verlaufende Pendelachsen gependelt wird, wobei mindestens eine Pendelachse nicht horizontal oder vertikal verläuft. Dabei werden bevorzugt Adapter bzw. Halterungen gemäß den genannten Aspekten der Anmeldung verwendet. Dieses Verfahren umfasst unter anderem eine erste Variante bei welcher die Auflageflächen der Anordnung bewegbar sind, so dass diese auf unterschiedliche Höhen einstellbar sind. Des Weiteren ist eine Variante umfasst, bei welcher der Adapter mehr als zwei Auflagekörper umfasst, so dass durch Bewegen des Adapters dieser um unterschiedliche Pendelachsen bewegbar ist. Beide Varianten sind mit einander kombinierbar.

Nachfolgend soll auf verschiedene Weiterbildungen bzw. Ausführungsformen der verschiedenen Aspekte eingegangen werden.

In einer Ausführungsform des ersten Aspekts weist der Adapter mindestens drei Auflagekörper auf, welche derart angeordnet sind, dass diese nicht auf einer Geraden liegen. Dadurch, dass die Auflagekörper nicht auf einer Geraden liegen und die die Auflagekörper verbindenden Verbindungslinien optional einander kreuzen können, können durch Umlegen der Auflagekörper auf die Auflageflächen bereits mindestens zwei nicht parallel zueinander verlaufende Pendelachsen eingestellt werden. Dieses einfache Verschieben des Adapters in einer entsprechenden Halterung vereinfacht das Verfahren zur Bestimmung des Trägheitsmoments.

In einer weiteren Ausführungsform des ersten Aspekts umfasst der Träger eine Vielzahl von Auflagekörpern. Durch die Vielzahl von Auflagekörpern, welche vorzugsweise nicht auf einer Geraden liegen, kann eine Vielzahl verschiedener Pendelachsen zwischen jeweils zwei Auflagekörpern definiert werden. Vorzugsweise umfasst der Adapter mehr als drei oder fünf, vorzugsweise mehr als 10 oder vorzugsweise mehr als 20 Auflagekörper auf. Die Anzahl der Auflagekörper ist unter anderem von der Größe der wirkenden Kräfte des Adapters und des zu vermessenden Körpers abhängig. Um die Flächenpressung und somit den Kugelkalotten bzw. -scheibenradius zu bestimmen kann auf die Hertzsche Formel für eine Kugel zurückgegriffen werden, d.h.

$$p\_max = (3*F*E^2/(2*\pi^3*(1-v^2)^2)*(2/d)^2)^{(1/3)},$$

wobei

E = E-Modul des Materials des Auflagekörpers
F = auf den Auflagekörper wirkende Kraft
d = Durchmesser des Auflagekörpers
v = Querkontraktionszahl.

In Abhängigkeit von der maximal auf einen Auflagekörper wirkenden Kraft, d.h. das Gewicht des Adapters und des zu vermessenden Objekts, kann nun der zulässige Durchmesser der Kugel für das ausgewählte Material des Auflagekörpers bestimmt werden. Dabei ist jedoch zu berücksichtigen, dass der Auflagekörper in einigen Ausführungsbeispielen einen Stift umfasst, wobei der Stift eine leichte Beabstandung der Kugelkalotte zum Träger bewirkt und die Kugelkalotte an dem Träger fixiert.

Die Anzahl der Auflagekörper beeinflusst die Anzahl der möglichen Aufhängungen bzw. definierbaren Pendelachsen des Adapters in Abhängigkeit der Anzahl der verfügbaren Auflageflächen.

In einer weiteren Ausführungsform des ersten Aspekts ist der Träger rotationssymmetrisch ausgebildet. Da die Auflagekörper am Träger angeordnet sind, können die Auflagekörper so beispielsweise im regelmäßigen Abstand zueinander an dem rotationssymmetrischen Träger angeordnet werden. Hierdurch ergibt sich auf der Außenseite des Trägers eine regelmäßige Anordnung der Auflagekörper, wobei aufgrund der Rotationssymmetrie des Trägers der Adapter punktweise rotationssymmetrisch sein kann (vergleichbar mit der Symmetrie bei Kristallen). Hierdurch vereinfacht sich die Handhabung des Adapters.

In einer weiteren Ausführungsform des ersten Aspekts, umfasst der Träger eine Vorrichtung zur Fixierung des zu vermessenden Objekts. Bei der Fixierung des Objekts wird diese in einem Koordinatensystem des Trägers raumfest gehalten, so dass das Pendeln des Körpers um verschiedene Pendelachsen des Adapters die Bestimmung der Trägheitseigenschaften ermöglicht. Zudem können dynamische Effekte, welche aufgrund der relativen Bewegung des Objekts zum Träger erfasst werden müssten, außen vor gelassen werden.

In einer weiteren Ausführungsform des ersten Aspekts ist der Adapter derart aufgebaut, dass dieser in einer Arbeitskonfiguration keine beweglichen Teile umfasst. Bei dieser Ausführungsform handelt es sich um einen robusten Adapter, welcher keine beweglichen Teile umfasst, sobald der Adapter in die Halterung zur Vermessung eingelegt wird. Beispielsweise können die Auflagekörper an dem Träger angeschraubt, genietet oder geschweißt bzw. gelötet werden. Weitere Verbindungstechniken sind im Stand der Technik und in Abhängigkeit von den verwendeten Materialien des Trägers und der Auflagekörper hinreichend bekannt. Als Materialien für den Träger bzw. die Auflagekörper kommen Metalle, vorzugsweise harte Metalle wie beispielsweise gehärtete Stähle (z.B. Kugellagerstahl), harte Kunststoffe, Keramiken oder Diamantstrukturen infrage, so dass eine elastische Verformung der Auflagekörper oder des Trägers vernachlässigt werden kann. Hierdurch vereinfachen sich die Verfahren zur Bestimmung der Trägheitseigenschaften. Während für die Auflagekörper ein Material großer Härte bevorzugt wird, ist beim Träger eine hohe Steifigkeit und vorzugsweise ein geringes Gewicht bevorzugt, d.h. auch Faserverbundstoffe oder Aluminium. In zahlreichen Ausführungsformen sind die Materialien der Auflagekörper und des Trägers verschieden.

In einer Ausführungsform des vierten Aspekts sind die Halterung und der Adapter voneinander lösbar ausgestaltet. Hierbei kann, insbesondere wenn der Adapter eine Vielzahl von Auflagekörpern umfasst, durch einfaches Anheben des Adapters und Veränderung der beiden Auflagepunkte, welche im Wesentlichen die Pendelachse bestimmen, ein schneller Wechsel der Pendelachsen des Adapters durchgeführt werden. Ein Einspannen des Adapters ist nicht vonnöten. Dieser wird also lediglich durch die Schwerekraft auf der Halterung gehalten.

In einer weiteren Ausführungsform des vierten Aspekts sind die zwei Auflageflächen auf einer unterschiedlichen Höhe relativ zum Halteträger angeordnet oder anordnenbar. Hierdurch können beispielsweise auch nicht horizontal verlaufende Pendelachsen vermessen werden. In anderen Ausführungsformen weist der Adapter mehr als zwei Auflagekörper auf, so dass der Adapter nahezu nicht bewegt werden muss, wenn die Auflageflächen derart verschoben werden, dass gegenüber einer ersten Messung mindestens ein anderer Auflagekörper verwendet wird, so dass die Pendelachse bei einer nachfolgenden Messung gegenüber der Pendelachse der ersten Messung verändert ist. Auf diese Weise wird der Prüfling nahezu nicht bewegt und in seiner Orientierung nicht verändert.

In einer weiteren Ausführungsform des vierten Aspekts liegen sich zwei Auflageflächen derart gegenüber, dass der Adapter zwischen den Auflageflächen gehalten ist. In anderen Worten ist zwischen den zwei Auflageflächen eine Ausnehmung vorhanden, so dass der Adapter zwischen den Auflageflächen schwingen kann.

In einer weiteren Ausführungsform sind zwischen den Auflageflächen oder Auflagekörpern sphärische Lager vorhanden, welche den ellipsoidkalottenförmigen Abschnitt definieren. Bevorzugt handelt es sich bei den Ellipsoidkalotten um Kugelkalotten.

Nachfolgend werden weitere Ausführungsformen der Erfindung beschrieben. Die Erfindung betrifft, wie bereits erwähnt, ein Schwerependel mit einer Halterung und einem Adapter, welcher mindestens einen Träger zur Befestigung eines zu vermessenden Schwerekörpers umfasst, wobei die Halterung derart mit dem Adapter verbunden ist, dass der Adapter um eine Pendelachse pendelbar ist. Bei diesem Aspekt der Erfindung ist der Adapter derart ausgestaltet, dass der Adapter um mindestens eine, nicht horizontal und nicht vertikal verlaufende Pendelachse gependelt werden kann.

In einem Ausführungsbeispiel der Erfindung ist das Schwerependel derart ausgebildet, dass eine Neigung der Pendelachse verstellbar ausgeführt ist. Um die verschiedenen oder alle Komponenten des Trägheitstensors eines Prüflings zu bestimmen, sind mehrere Messungen notwendig. Hierbei ist es vorteilhaft, wenn der Prüfling bzw. das zu vermessende Objekt entlang verschiedener Achsen des Prüflings gependelt wird. Da jedoch gerade schwere Prüflinge nur wenig bewegt werden sollen, ist es in einem Ausführungsbeispiel vorgesehen, die Neigung der Pendelachse zu verändern, beispielsweise indem die Halterung, in welcher der Adapter gelagert ist, in ihrer Neigung verstellt werden kann. Dabei kann es in einer Variante zudem vorgesehen sein, dass die mit dem Adapter verbundene Achse gegenüber dem Adapter ebenfalls in ihrer Neigung geändert werden kann. Hierzu kann beispielsweise die Achse am Adapter mithilfe eines Gelenks rotiert werden, um so unterschiedliche Neigungen der Achse und somit der Pendelachse einzustellen. Weiterhin kann die Halterung ebenfalls drehbar gelagert werden, beispielsweise in einem Lagerbock.

In einem weiteren Ausführungsbeispiel der Erfindung ist die Pendelachse derart einstellbar, dass ein Schwerpunkt eines zu vermessenden Objekts unterhalb der Pendelachse liegt. Von einem Schwerependel wird zumeist gesprochen, wenn der Schwerpunkt des zu vermessenden Objekts unterhalb der Pendelachse liegt. Da bei der Erfindung der Prüfling bzw. das zu vermessende Objekt oftmals auf dem Träger des Adapters angeordnet ist, ist es in einigen Varianten vorgesehen, eine Verstellbarkeit der Neigung der Pendelachsen dergestalt vorzusehen, dass auch besonders große Prüflinge mit dem Schwerependel vermessen werden können. Hierzu kann beispielsweise vorgesehen sein, die Neigung der Pendelachse von der Horizontalen aus betrachtet bis zu einem Winkelbereich von 89°, vorteilhafterweise bis zu 80°, vorzusehen. Auf diese Weise können auch Prüflinge mit hohem Schwerpunkt mithilfe des Schwerependels vermessen werden.

In einem weiteren Ausführungsbeispiel der Erfindung ist der Adapter über eine Achse mit der Halterung verbunden, wobei die Achse koaxial mit der Pendelachse ist.

In einer weiteren Variante ist vorgesehen, dass der Adapter beispielsweise über ein sphärisches Lager, wie beispielsweise ein sphärisches Luftlager oder ein hydraulisches sphärisches Lager, mit der Halterung verbunden ist, wobei der Mittelpunkt der Sphäre einen Punkt der Pendelachse darstellt. Bei dieser Variante kann vorgesehen sein, entweder die Kugelkalotte oder die Kugelpfanne mit der Halterung bzw. dem Adapter zu verbinden.

Die sphärischen Lager haben beispielsweise den Vorteil, dass diese eine besonders einfache Verstellbarkeit der Pendelachse ermöglichen. Bei der Verwendung einer Achse, die mit der Halterung verbunden ist, muss zur Verstellbarkeit der Neigung der Pendelachse die Achse gegenüber dem Adapter in ihrer Neigung verstellbar sein. Dies ist bei einem sphärischen Lager nicht im gleichen Maße notwendig.

In einem weiteren Ausführungsbeispiel umfasst das Schwerependel mindestens ein weiteres Lager. Hierbei ist es vorteilhaft, wenn mindestens eine um eine Raumachse rotierbare Ebene, wie beispielsweise eine Gleitplatte, insbesondere eine ebene Gleitplatte, vorhanden ist, entlang welcher das weitere Lager abgestützt ist. Das weitere Lager ist an der Unterseite des Adapters angeordnet. Die um eine Raumachse rotierbare Ebene wird dabei so eingestellt, dass diese senkrecht zur Pendelachse steht. Auf dieses Weise stützt die Ebene das mit dem Adapter verbundene weitere Lager ab, so dass auf den Adapter bzw. das zu vermessende Objekt bzw. die Achse kein oder ein geringes Drehmoment wirkt. Hierdurch wird die Tragfähigkeit und die Robustheit des Schwerependels verbessert. Wird eine verstellbare Achse, ein sphärisches oder zylindermantelförmiges Lager als Pendelachse bestimmt, kann über eine Rotation der rotierbaren Ebene bzw. der Gleitplatte der Winkel der Pendelachse eingestellt werden, da die Pendelachse stets im rechten Winkel zur Ebene stehen muss, um eine Pendelbewegung um die Pendelachse zu ermöglichen. Auf diese Weise kann besonders einfach durch Verstellung des Winkels der Ebene eine Verstellung der Pendelachse erreicht werden, ohne den Prüfling bzw. das zu vermessende Objekt auf dem Adapter zu bewegen.

Dabei ist in einer weiteren Ausführungsform vorgesehen, dass die Gleitplatte mechanisch, hydraulisch oder pneumatisch in ihrer Winkeleinstellung veränderbar ist. So kann beispielsweise vorgesehen sein, an der Gleitplatte einen hydraulischen oderpneumatischen Zylinder anzuordnen, welcher die Winkeleinstellung der Gleitplatte verändert. Dabei ist es vorteilhaft, wenn die Gleitplatte selbst beispielsweise in einem Lagerbock rotierbar gelagert ist. Weiterhin ist es auch möglich, mittels einer Mechanik die Winkeleinstellung der Gleitplatte zu verändern. Dabei kann die Mechanik beispielsweise mittels eines Motors bedient werden.

Bei den weiteren Lagern kann es beispielsweise um ein ebenes Gleitlager, insbesondere ein ebenes Luftlager, handeln, das über ein Kugelgelenk mit dem Adapter verbunden ist. Alternativ kann das weitere Lager beispielsweise durch eine am Adapter rotierbare Kugel realisiert sein. Die weiteren Lager können auch als Traglager bezeichnet werden, um sie von den Pendellagern, durch welche die Pendelachse läuft zu unterscheiden.

In einer weiteren Ausführungsform ist der Träger gegenüber dem Adapter rotierbar ausgebildet. Um eine möglichst einfache Rotation des Prüflings auf dem Adapter zu ermöglichen, kann der auf dem Adapter angeordnete Träger beispielsweise gegenüber dem Adapter verdreht werden. So kann beispielsweise der Träger einen im Zentrum angeordneten Fortsatz oder Stift aufweisen, der in eine zylinderförmige Nut des Adapters eingreift. Ist in dieser Nut bzw. an dem Zapfen ein Lager, wie z.b. ein Kugellager angeordnet, kann der Träger gegenüber dem Adapter auf einfache Art und Weise verdreht werden. Um eine Verdrehung während einer Messung zu verhindern, kann weiterhin vorgesehen sein, den Rotationsmechanismus zwischen dem Träger und dem Adapter mit einem Verriegelungsmechanismus auszubilden. Der Verriegelungsmechanismus kann beispielsweise durch Verriegelungsstifte, die in Nuten eingreifen, realisiert werden. Es sind jedoch auch weitere aus dem Stand der Technik bekannte Verriegelungsmechanismen anwendbar.

In einer weiteren Variante ist der Träger gegenüber dem Adapter linear verschiebbar. So kann beispielsweise der Träger auf dem Adapter in einer Schiene geführt werden, so dass die Position des Trägers auf dem Adapter auch transversal verändert werden kann. Auch hierdurch ergibt sich die Möglichkeit, den Prüfling um verschiedene Achsen zu pendeln. Auch der transversal verschiebbare Träger kann dabei mittels eines Verriegelungsmechanismus gegenüber dem Adapter verriegelt werden, so dass eine Messung ohne Bewegung des Trägers auf dem Adapter vollzogen werden kann.

In einem weiteren Ausführungsbeispiel umfasst das Schwerependel ein Gestell, das beispielsweise auf dem Boden angeordnet werden kann und auf dem der Adapter pendelbar ist. Dabei kann abhängig von der verwendeten Variante des Schwerependels die rotierbare Ebene bzw. eine Lagerschale des Pendellagers auf dem Gestell angeordnet werden und der Adapter die weiteren Traglager bzw. die verbleibenden Komponenten des Pendellagers umfassen, welches auf den Gleitplatten freischwingend angeordnet werden kann. Dabei kann das Gestell auch Sensorik umfassen, mittels derer die Schwingungsfrequenzen der freien Schwingung des Adapters gegenüber dem Gestell ausgewertet werden können. Hierzu sind beispielsweise Spiegel, Abstandssensoren und weitere aus dem Stand der Technik bekannte Maßnahmen zur Auswertung eines Frequenzspektrums denkbar. Hierzu wird insbesondere auf die taggleich eingereichte internationale Anmeldung hingewiesen, welche die Priorität der DE 10 2013 208 863.9 in Anspruch nimmt.

Ein Schwerependel gemäß der Erfindung kann so eingesetzt werden, dass zur Bestimmung mindestens eines Trägheitsmoments und in Varianten auch des Schwerpunkts der Adapter nacheinander um mindestens zwei nicht parallel zu einander verlaufende Pendelachsen gependelt wird. Weiterhin kann der Adapter auch nacheinander um zwei parallel zueinander verlaufende Pendelachsen gependelt werden, sofern die beiden Pendelachsen keine koaxialen Raumachsen des Prüflings abbilden.

Weitere Ausführungsbeispiele werden anhand der nachfolgenden Figuren erläutert. Es zeigen

Fign. 1a und 1b      einfache Ausführungsform eines Adapters und eines Schwerpendelsystems;

Fign. 2a bis 2d      schematische Illustrierung eines Adapters mit mehreren Auflagekörpern zur Definition verschiedener Pendelachsen;

Fig. 3a und 3b     weiterer Ausführungsformen eines Schwerependelsystems;

Fig. 4a bis 4e     weitere Variante eines Schwerependels;

Fig. 5     Ausführungsbeispiel eines Schwerependels mit Pendelhalterungen mit keilförmigen Auflageflächen;

Fig. 6a und 6b     weiteres Ausführungsbeispiel eines Schwerependelsystems;

Fig. 7a bis 7f     weitere Ausführungsbeispiele eines Schwerependels mit nicht horizontal verlaufender Pendelachse;

Fig. 8a und 8b     weiteres Ausführungsbeispiel eines Schwerependels mit nicht horizontal verlaufender Pendelachse;

Fig. 9a bis 9d     weiteres Ausführungsbeispiel eines Schwerependels mit nicht horizontal verlaufender Pendelachse;

Fig. 10a und 10b     Details einer möglichen Variante einer Gleitplatte der Ausführungsbeispiele der Fig. 7-9;

Fig. 11a und 11b     weiteres Ausführungsbeispiel eines Schwerependels mit nicht horizontal verlaufender Pendelachse.

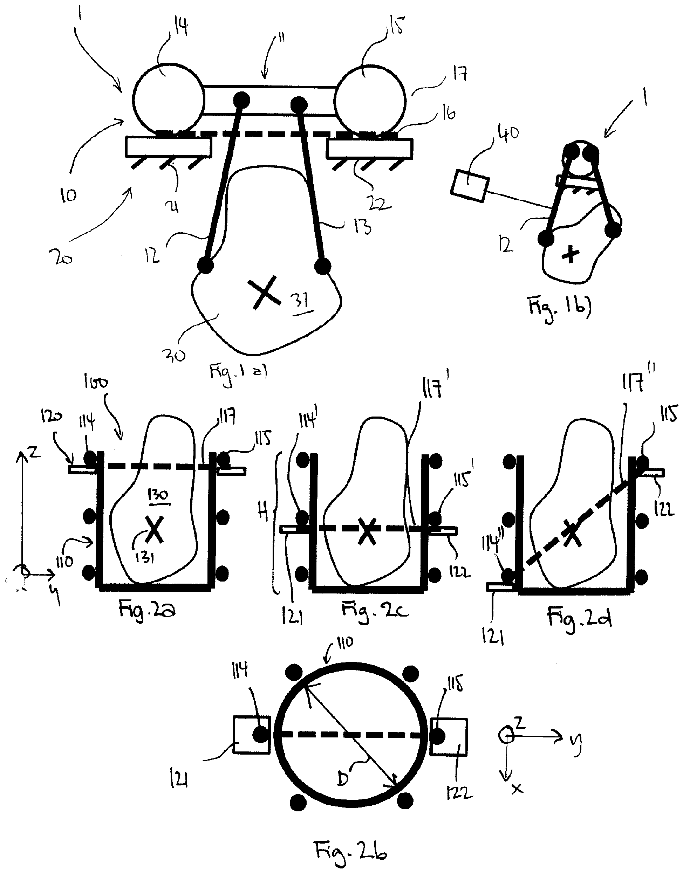

In der Fig. 1 ist ein einfaches Schwerependelsystem 1 dargestellt. Das Schwerependelsystem 1 umfasst einen Adapter 10 sowie eine Halterung 20. Mittels des Schwerependelsystems sollen Trägheitsmomente, Deviationsmomente sowie der Schwerpunkt des Objekts 30 bestimmt werden können.

Der Adapter 10 umfasst einen Träger 11, an welchem sich zwei Fixierstangen 12 und 13 befinden, an deren Enden Klemmstifte angeordnet sind, welche den zu vermessenden Körper 30 gegenüber dem Adapter 10 bzw. gegenüber dem Träger 11 fixieren. Dies bedeutet, dass der Körper 30 in einem auf den Träger 11 bezogenen Koordinatensystem unbewegt ist und Veränderungen der Orientierung der Pendelachse zu einer Bestimmung eines weiteren Trägheitsparameters heranziehbar sind. Am linken und rechten Rand des Trägers befinden sich Auflagekörper 14 und 15, welche im vorliegenden Fall als Kugelkalotten ausgebildet sind. Die dargestellten Auflagekörper sind dabei Kugelsegmente bzw. Kugelkalotten, welche ein Volumen einnehmen, das wesentlich mehr als die Hälfte des Volumens einer Kugel mit gleichem Durchmesser einnimmt. Durch die Ausbildung der Auflagekörper 14 und 15 als Kugelkalotten wird gewährleistet, dass die Kontaktfläche zwischen den Auflagekörpern 14 und 15 gegenüber den Auflageflächen 21 und 22 der Halterung möglichst klein sind. Hierdurch wird bei einer Pendelbewegung des Pendels um die Pendelachse 17 die Reibung minimiert.

Bei den Auflagekörpern handelt es sich um Kugelkalotten, welche einen Durchmesser von weniger als 20 mm besitzen. Bei der Größe der Kugelkalotten wurde darauf geachtet, dass der Reibungswiderstand gering ist.

In dem vorliegenden Beispiel der Fig. 1a ist die Pendelachse horizontal ausgebildet. Dies liegt daran, dass die Auflageflächen 21 und 22 auf derselben Höhe angeordnet sind. Zwischen den Auflageflächen 21 und 22 befindet sich eine Ausnehmung 23, in welcher der Körper 30 pendeln bzw. frei schwingen kann. Wird nun der Adapter 10 auf zwei weitere Auflageflächen gelegt, die nicht dieselbe Höhe aufweisen, wird das Objekt 30 um eine nichthorizontale Pendelachse gependelt. Aufgrund der Kugelkalottenform der Auflagekörper 14 und 15 ist die Auflagefläche gegenüber dem Fall der horizontalen Pendelachse im Wesentlichen gleich und Probleme welche beispielsweise bei der Verwendung von Messerlagern in verschiedenen Orientierungen auftreten würden, werden vermieden.

Anhand der Fig. 1b soll kurz auf Mechanismen zum Erfassen der Pendeldaten eingegangen werden. Auf eine Fixierungsstange 12 des Pendelsystems 1 ist ein Entfernungsbestimmungslaser 40 gerichtet, welcher die Distanz der Fixierungsstange 12 vom Laser pro Zeiteinheit misst. Anhand der Bestimmung dieser Daten kann die Frequenz der Pendelbewegung bestimmt werden. Aus dieser und weiteren Messungen wiederum lassen sich, nachdem das Objekt 30 entlang verschiedener, nicht parallel zueinander verlaufender Pendelachsen gependelt wurde, nach und nach der gesamte Trägheitstensor sowie mit Hilfe eines Neigungssensors auch der Schwerpunkt bestimmen, obgleich die Bestimmung des Schwerpunkts auch aus der Messung der Eigenfrequenzen un d der Amplitude der Schwingung möglich ist. Im vorliegenden Beispiel sind die Auflagekörper 14 und 15 aus einem harten Material wie beispielsweise einem harten Stahl gefertigt und weisen vorzugsweise einen einheitlichen Krümmungsradius auf. Jedoch können die Kugelkalotten auch als Ellipsoidkalotten oder als Kegelschnittkalotten ausgebildet sein und das Verfahren würde weiterhin (wenn auch mit einigen Korrekturen aufgrund der sich ändernden Reibungskräfte) durchführbar sein. Aufgrund der Symmetrie der Kugelkalotten jedoch ist es möglich, egal in welcher Orientierung der Träger auf zwei Auflageflächen aufgelegt wird, die Gesamtflächenpressung der beiden Auflagekörper auf den Auflageflächen gleich ist. Dies vereinfacht die Handhabung des Pendelsystems 1. Obgleich nachfolgend oftmals von Kugelkalotten gesprochen wird, umfassen diese auch die Kugelscheiben wie in einem der vorhergehenden Abschnitte erwähnt. In diesem Falle wäre die Kugelkalotte des Auflagekörpers 14 an ihrem linken Rand abgeflacht. Zudem können die Auflagekörper neben den Kugelkalotten noch Stifte umfassen, welche am Träger befestigt werden. Im vorliegenden Beispiel könnte diese Kugelkalotten mit Stiften als Kugelzapfen gemäß DIN 71803 ausgebildet werden.

In den Fign. 2 wird ein weiteres Schwerependelsystem schematisch dargestellt. Das Schwerependel 100 umfasst einen Adapter 110, welcher auf einer Halterung 120 gehalten ist. Der Adapter 110 umfasst einen Träger 111, welcher zylinderförmig ausgestaltet ist. Das zu vermessende Objekt 130 mit dem Schwerpunkt 131 wird im Adapter 110 angeordnet und derart fixiert, dass es gegenüber einem trägereigenen Koordinatensystem raumfest ist. Das trägereigene Koordinatensystem kann vorliegend durch Zylinderkoordinaten, welche durch einen Mittelpunkt des zylinderförmigen Träger verlaufen, definiert werden. Alternativen sind ebenfalls möglich. An dem Träger 111, welcher im vorliegenden Fall aus einem Metall oder einem Kunststoff gefertigt sein kann, sind Auflagekörper 114 bzw. 115 angeordnet, welche, wie anhand der Fign. 2a und 2b erkennbar ist, auf verschiedenen Ebenen in der Z-Richtung und in regelmäßigen Abständen entlang des Umfangs des Zylinders des Trägers 111 in der XY Ebene angeordnet sind. Die Auflagekörper 114 bzw. 115 sind dabei derart am Träger 111 angeordnet, dass sie jeweils einander gegenüberliegen. Das heißt, dass sie den vollen Durchmesser D des Trägers 111 überspannen. Im Verhältnis zum Durchmesser D des Trägers 111 und der Höhe H des Trägers 111 sind die Auflagekörper klein ausgebildet. Im vorliegenden Beispiel handelt es sich bei den Auflagekörpern um an Metallstiften angeordnete Kugelkalotten. Die Stifte können integral oder kraft- oder formschlüssig mit den Kugelkalotten verbunden sein. Der Durchmesser der Kugel der Kugelkalotten ist dabei im Wesentlichen um einen Faktor 10, vorzugsweise mehr als um einen Faktor 15 kleiner als die Höhe bzw. der Durchmesser des Trägers.

Wie anhand der Fig. 2b erkennbar ist, umfasst die Halterung 120 im vorliegenden Ausführungsbeispiel lediglich zwei Auflageflächen 121 und 122. Diese sind lediglich entlang der Z-Richtung höhenverstellbar. Optional können in anderen Ausführungsformen die Auflageflächen auch in der XY Ebene verschoben werden. Der in der Fig. 2b dargestellte Aufhängezustand des Adapters 110 entspricht dem in den Fign. 2a und 2c dargestellten Fall. Die Pendelachse 117 unterscheidet sich von der Pendelachse 117', welche in der Fig. 2c dargestellt wird. Um den Adapter 110 in die in der Fig. 2c dargestellte Position zu bringen, muss dieser lediglich angehoben werden, so dass die Auflagekörper 114' bzw. 115' auf den Auflageflächen zum Liegen kommen. Die Pendelachse 117' befindet sich deutlich näher am Schwerpunkt 131 als im in Fig. 2a dargestellten Fall. In dieser Variante bleibt das zu vermessende Objekt über die Messung verschiedener Pendelachsen hinweg jedoch immer in einer einheitlichen Orientierung (bei ruhendem Pendel), so dass auch hochelastische, leicht zu beschädigende Objekte mittels der Vorrichtung oder mit diesem durchführbaren Verfahren vermessen werden können. Weiterhin eignet sich diese Variante für vergleichsweise schwere Objekte, die sich nicht ohne weiteres drehen lassen.

Zusätzlich zu den in den Fign. 2a und 2c dargestellten Pendelachsen können die Auflageflächen 121 und 122 derart in ihrer Höhe verstellt werden, dass die Auflageflächen nicht mehr auf derselben Höhe liegen. In dem in der Fig. 2d dargestellten Fall liegt der Auflagekörper 114" auf der Auflagefläche 121, wohingegen der Auflagekörper 115 auf dem sich auf einer unterschiedlichen Höhe befindliche Auflagefläche 122 befindet. Hierdurch wird eine Pendelachse 117" definiert, welche nicht länger waagerecht, d.h., senkrecht zur Z-Richtung verläuft, sondern unter einem Winkel zu dieser. Da sich aufgrund der Vielzahl von Auflagekörpern eine Vielzahl von Kombinationen an Pendelachsen ergibt, kann die vollständige Vermessung des Körpers zur Bestimmung des vollständigen Trägheitstensors bzw. des Schwerpunkts und der Masse auf einfache Art und Weise durchgeführt werden.

Der Adapter 110 ist dabei derart ausgestaltet, dass dieser verschiedene Objekte aufnehmen kann. Beispielsweise kann der Adapter eine Höhe von bis zu 100 cm, vorzugsweise weniger als 50 cm, vorzugsweise weniger als 20 cm einnehmen. Der Radius kann sich ebenfalls in diesen Größenordnungen bewegen. Auf diese Art und Weise ist es beispielsweise bei Objekten mit geringer Masse und geringen Ausmaßen möglich, den Trägheitstensor auf sehr einfache Art und Weise zu bestimmen. In einer Ausführungsform ist der Adapter derart ausgebildet, dass dieser Objekte mit bis zu 10 kg, bis zu 20 kg Masse, oder bis zu 50 kg aufnehmen kann.

Obgleich in den Fign. 2 wiederum Auflagekörper mit Kugel- bzw. Ellipsoidkalotten dargestellt werden, könnten die Ellipsoidkalotten auch durch die Spitzen von Polyedern, welche in Z-Richtung nach unten zeigen, ersetzt werden. Diese sind jedoch schwieriger herzustellen und haben insbesondere eine höhere Flächenpressung, so dass entweder die Spitzen des Polyeders oder die Auflageflächen beschädigt werden könnten.

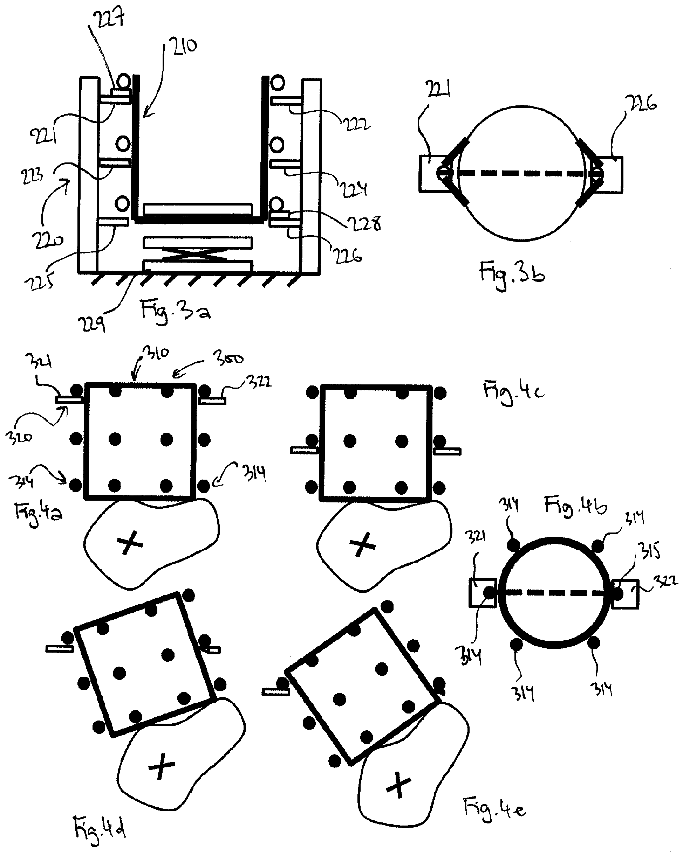

Eine alternative Ausführung eines Pendelsystems ist in den Fign. 3 dargestellt. Das Pendelsystem 200 umfasst einen Adapter 210 sowie eine Haltevorrichtung 220. Der Adapter 210 ist dabei derart ausgebildet, dass dieser Auflagekörper 214 und 215 umfasst, welche einander, den gesamten Durchmesser des Adapters überspannend, gegenüberliegen. Es ist eine Vielzahl von Auflagekörpern am Träger des Adapters 210 angeordnet, allerdings unterscheiden sich diese lediglich in ihrer Höhenposition, nicht jedoch entlang ihrer Position an der Außenoberfläche des Adapters (s. Fig. 3b). Alternativ kann der Adapter 210 eine drehbare Plattform umfassen, so dass das zu vermessende Objekt gedreht werden kann und so die zwischen zwei gleichen Auflagekörpern verlaufende Pendelachse unterschiedliche Momente des Objekts beleuchten kann. In diesem Sinne sind die Pendelachsen zweier Messungen im ortseigenen Koordinatensystem des Objekts verschieden. Selbstverständlich kann jedoch auch ein Adapter 110, wie in den Fign. 2 dargestellt, in der Haltevorrichtung 220 zum Einsatz kommen, sofern die Außenabmessungen dergestalt sind, dass ein Pendeln des Adapters zwischen den Auflageflächen der Halterung möglich ist. Die Haltevorrichtung 220 umfasst eine Vielzahl von Auflageflächen 221 bis 226. Die Auflageflächen liegen einander gegenüber und in Z-Richtung paarweise übereinander. Zusätzlich umfasst die Haltevorrichtung Abstandsvorrichtungen 227 sowie 228, welche zwischen die Auflagefläche und den Auflagekörper des Adapters geschoben werden, um zu bewirken, dass lediglich zwei Auflagekörper durch die Haltevorrichtung 220 gehalten werden. Auf diese Weise wird eine Pendelachse definiert und die Eigenschaften des Körpers können pendelnd vermessen werden. Des Weiteren umfasst die Haltevorrichtung eine Hebevorrichtung 229, welche den Adapter 210 leicht anheben kann, um die Abstandselemente 227 und 228 für verschiedene Messungen an verschiedenen Auflageflächen zu positionieren. Hierdurch können innerhalb von kürzerer Zeit zahlreiche verschiedene Pendelachsen definiert werden, um so die Eigenschaften des zu vermessenden Objekts vollständig zu bestimmen.

Anhand der Fign. 4 soll eine weitere Ausführungsform eines Schwerependels erläutert werden. Das Schwerependelsystem 300 umfasst einen Adapter 310, welcher analog zu dem Adapter 110 der Fig. 2 ausgebildet ist, d.h., welcher an der Außenseite des Trägers 311 über eine Vielzahl von Auflagekörpern 314, 315 bzw. 316 verfügt. Die Halterung 320 umfasst lediglich zwei Auflageflächen 321 und 322, wie in den Fig. 4b erkennbar. Als Alternative zum Adapter 110 ist vorgesehen, das Objekt 330 nicht innerhalb des Adapters anzuordnen, sondern das Objekt außen am Adapter 310 zu fixieren. Die Befestigung kann dabei beispielsweise auch mit einem Klebeband oder ähnlichem durchgeführt werden. Während im Ausführungsbeispiel der Fig. 2 der Adapter im Wesentlichen wenig bewegt wurde, sondern, aufgrund der unterschiedlichen Einstellungen der Auflageflächen, unterschiedliche Pendelachsen herbeigeführt wurden, wird bei dem Ausführungsbeispiel der Fign. 4 der Adapter räumlich verschoben. Dies ist anhand der unterschiedlichen Positionen des Adapters in den Fign. 4a, 4c, 4d und 4e erkennbar. Es ist ersichtlich, dass in den unterschiedlichen Konfigurationen der Fign. 4a, 4c, 4d und 4e vier unterschiedliche Pendelachsen eingestellt werden.

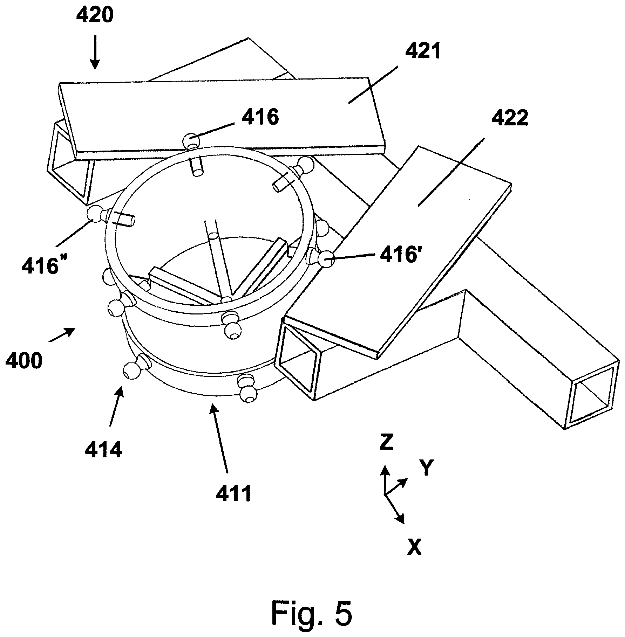

Eine weitere alternative Ausführungsform eines Schwerependels, welche dem Ausführungsbeispiel der Fign. 2 und 4 sehr ähnlich ist, ist in der Fig. 5 dargestellt. Das Schwerependelsystem 400 umfasst einen Adapter 410 mit einer Vielzahl von identischen Auflagekörpern 414, welche kugelkalottenförmig ausgebildet sind. Der Adapter 410 besitzt keine bewegbaren Teile, kann also nur als Ganzes bewegt werden. Die Halterung 420 umfasst zwei Auflageflächen 421 sowie 422, welche sich entlang der X-Richtung in ihrer Breite, d.h. in der Y-Richtung, aufeinander zu bewegen. Dies hat den Vorteil, dass, wenn, wie in der dargestellten Konfiguration gezeigt, nicht Auflagekörper verwendet werden, welche den gesamten Durchmesser des Trägers 411 überspannen, diese dennoch auf den Auflageflächen gehalten werden können. In dem vorliegenden Beispiel liegen zwei ausgewählte Auflagekörper 416 und 416' auf den Auflageflächen 421 bzw. 422 auf. Würden nun die Auflagekörper 416' und der Auflagekörper 416" gewählt werden, um die nächste Pendelachse zu bilden, müsste der Adapter 410 lediglich angehoben werden und derart auf die Auflageflächen gelegt werden, dass der Adapter zwischen den Auflageflächen schwingen kann. Hierzu würden andere Auflagepunkte auf den Auflageflächen gewählt werden, da der Abstand der Auflagekörper 416' und 416" größer ist als der Abstand der Auflagekörper 416 und 416'. Sämtliche Auflagekörper sind an dem Träger angeschraubt, genietet, verschweißt oder geklebt. Die einzige Bewegung, welche der Adapter ausführt, ist die Pendelbewegung um die durch die beiden Auflagekörper definierte Pendelachse. Aufgrund der Symmetrie der Auflagekörper können verschiedenste Kombinationen von zwei Auflagekörpern zur Definition der Pendelachse herangezogen werden. Hierdurch ergibt sich die Möglichkeit innerhalb von wenigen Schwingvorgängen mit einfach herbeizuführenden Übergängen, d.h. durch Umhängen des Adapters in der Haltevorrichtung, zur Bestimmung sämtlicher Trägheits- bzw. Deviationsmomente zu gelangen. Wird in dem Adapter 410 beispielsweise zusätzlich ein Neigungssensor angeordnet, kann zudem zugleich der Schwerpunkt geometrisch bestimmt werden. Hierdurch verringert sich die Anzahl der durchzuführenden Messungen auf Messungen um sechs verschiedene Pendelachsen. Bei dem in der Fig. 5 dargestellten Schwerependel handelt es sich sämtlich um Gegenstände aus Metall. Es sind jedoch auch andere abriebfeste Materialien möglich. Die Kugelkalotten der Auflagekörper 414 bzw. 416 haben einen Durchmesser von 16 mm. In der Z-Richtung hat der Adapter, welcher zylinderförmig ausgebildet ist, eine Höhe von 10 cm und in der XY-Ebene einen Durchmesser von ebenfalls 10 cm.

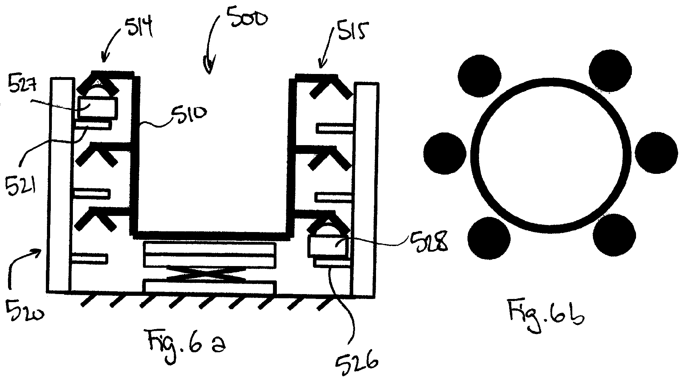

In den Figuren 6 wird eine weitere Alternative eines Schwerependelsystems 500 dargestellt. Der Adapter 510 umfasst dabei Auflagekörper oder Verbindungselemente, welche derart mit einem sphärischen Lager in Kontakt treten können, so dass ein auf den Auflageflächen 521 bis 526 angeordnetes sphärisches Lager 527 bzw. 528 die Pendelachse 517 definiert. In dem Ausführungsbeispiel der Figuren 6 bedarf der Adapter keinerlei Kugelkalotten, sondern lediglich Aufnahmevorrichtungen zum Verbinden mit Kugelkalotten, welche an der Haltevorrichtung 520 angeordnet sind. Im vorliegenden Fall sind die Kugelkalotten als Teil des sphärischen Lagers ausgebildet. Dies kann beispielsweise ein luft- oder flüssigkeitsstabilisiertes Lager sein. Ansonsten können die verschiedenen Pendelachsen ähnlich wie in den vorhergehenden Ausführungsbeispielen durch unterschiedliche Kombinationen von Auflagekörpern und den sphärischen Lagern 527 und 528 herbeigeführt werden, um so die gesamten Trägheits- und Deviationsmomente sowie der Schwerpunkt des Objektes, welches in dem Adapter 510 gehalten wird, zu bestimmen. Um den Adapter 510 mit den auf den Auflageflächen 521 und 526 angeordneten sphärischen Lagern 527 und 528 zu verbinden, können die Auflagekörper beispielsweise Stifte umfassen, wobei die sphärischen Lager korrespondierende Öffnungen für die Stifte umfassen, so dass diese mit dem Adapter eine formschlüssige Verbindung eingehen. Bewegungen des Adapters werden nunmehr reibungslos auf die sphärischen Lager übertragen und die Pendelvorgänge können durchgeführt werden.

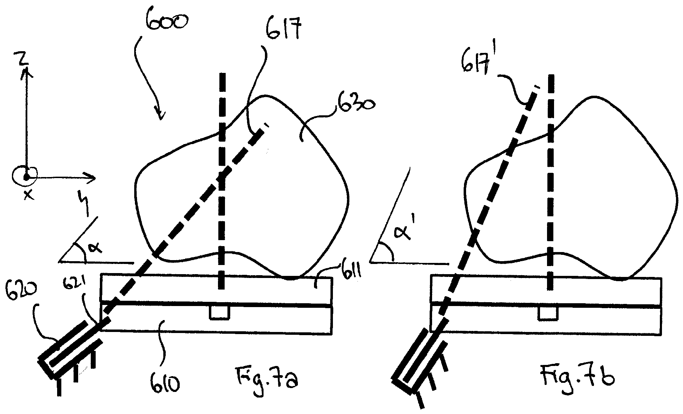

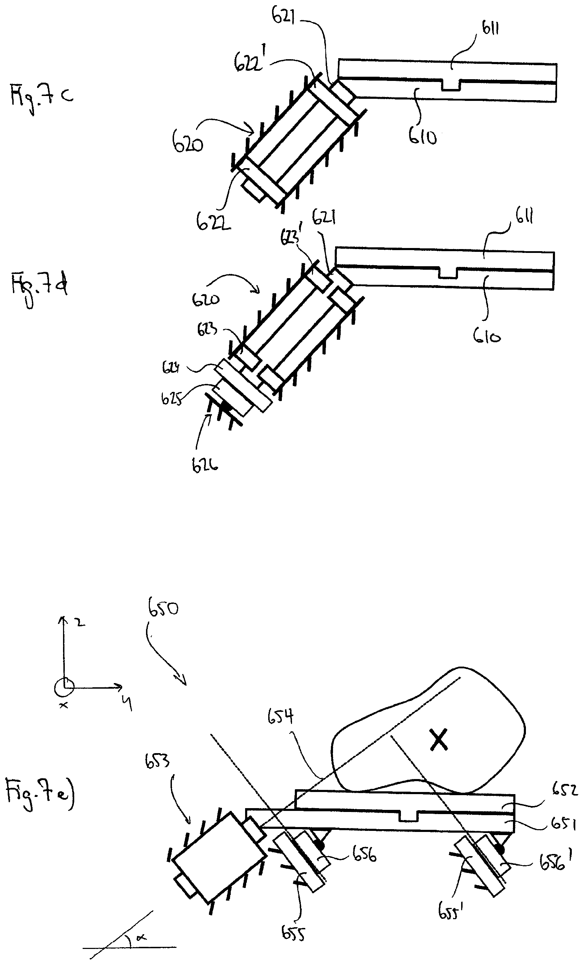

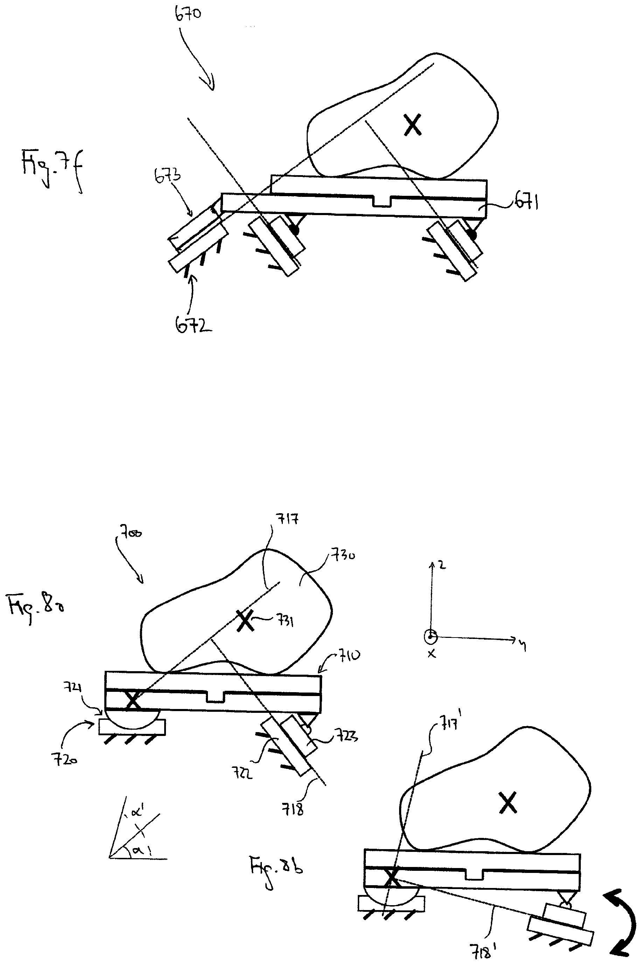

Anhand der Figuren 7 und 8 sollen weitere Ausführungsformen von Schwerependeln erläutert werden, welche ein Pendeln um mindestens eine nicht horizontal oder vertikal verlaufende Pendelachse ermöglichen. Dass in den Figuren 7 gezeigte, schematische Schwerependel umfasst einen Adapter 610, sowie eine Halterung 620 und ein auf dem Adapter 610 angeordnetes Objekt 630. Die Oberfläche des Trägers 611 ist in einer Ruheposition horizontal ausgerichtet. Der Adapter 610 ist mit der Haltevorrichtung 620 über eine Achse verbunden. Die Achse 621 ist dabei derart angeordnet, dass diese jeweils unter einem von $\alpha = 0$ verschiedenen Winkel von der z- und y-Achse verschieden ist. Die so definierte Pendelachse 617 verläuft somit nicht horizontal. Durch Ändern des Winkels $\alpha$ zwischen dem Adapter 610 und der Achse 621 können nun verschiedene Pendelachsen eingestellt werden. Dies ist beispielsweise anhand der Figur 7b erkennbar, bei welcher der Winkel $\alpha'$ deutlich vom Winkel a der Figur 7a verschieden ist. Auf diese Weisen können unterschiedliche Schrägen der Pendelachse zur Bestimmung der Trägheitseigenschaften eingesetzt werden. Der Schwerpunkt des zu vermessenden Objekts sollte unterhalb der Pendelachse liegen.

Anhand der Figuren 7c und 7d soll eine Lagerung der mit dem Adapter verbundenen Achse genauer erläutert werden. In Figur 7c ist ein Längsschnitt durch die Halterung 620 gezeigt. In der Halterung 620 wird die Achse 621 gehalten, die an dem Adapter 610 befestigt ist. Der auf dem Adapter 610 angeordnete Träger 611 ist auf dem Adapter 610 drehbar gelagert und ist mit der Achse 621 nicht direkt verbunden. Die Achse wird in der eingezeichneten Neigung durch zwei Lager 622 und 622' gehalten. Dabei können die Lager im vorliegenden Fall beispielsweise durch Kugellager realisiert sein.

Eine weitere Variante einer Lagerung ist in Figur 7d dargestellt. Auch hier ist ein Längsschnitt durch eine Variante der Halterung 620 gezeigt Die Achse 621 wird durch zwei Segmentluftlager 623 und 623' geführt. An einem dem Adapter 610 abgewandten Ende der Achse 621 ist eine Platte 624 angeordnet, welche zusammen mit dem Element 625 ein ebenes Gleitlager ausbildet. Das Element 625 umfasst zudem ein Winkelausgleichselement, das sich nicht dynamisch bewegt. Das Winkelausgleichselement kann beispielsweise ein Zapfen sein, welcher in einer Senkbohrung der Platte 626 gehalten ist. Die Neigung der Ebene 626 ist gegenüber der Neigung der Achse 621 um 90° verdreht.

Anhand der Figuren 7c und 7d soll lediglich illustriert werden, dass eine Vielzahl von Lagermechanismen für die Pendellager mit einer Achse möglich ist.

Eine weitere Variante eines Schwerependels ist in Figur 7e dargestellt. Das Schwerependel 650 umfasst eine Halterung 653, die beispielsweise wie in den Figuren 7c oder 7d beschrieben ausgebildet sein kann. Die in der Halterung 653 geführte Achse definiert eine Pendelachse 654, die so gewählt ist, dass sie oberhalb eines mit ‚X' markierten Schwerpunkts eines Prüflings 660 verläuft.

Damit auf die Achse kein Drehmoment wirkt, umfasst das Schwerependel zusätzlich zwei als Gleitplatten ausgebildete Ebenen 655 und 655'. An der Unterseite des Adapters 651, der im Wesentlichen mit dem Adapter 610 der Figuren 7a-d vergleichbar ist, befinden sich zwei ebene Gleitlager 656 und 656', die auf der entsprechenden Ebene 655 bzw. 655' gleitend angeordnet sind. Dabei ist die Neigung der Ebenen 655 und 655' im rechten Winkel zur Neigung der Pendelachse 654 gewählt. Um verschiedene Trägheitskomponenten des Prüflings 660 zu vermessen, kann beispielsweise der Träger 652 gegenüber dem Adapter 651 verdreht werden und jeweils eine Messung pro Lage des Trägers nach einer Drehung durchgeführt werden. So können weitere Komponenten des Trägheitstensors bzw. des Schwerpunkts ermittelt werden, bis dieser vollständig vorliegt. Um beispielsweise eine Verstellbarkeit der Neigung der Pendelachse 654 zu gewährleisten, können die Halterung 653 und die Gleitplatten 655 und 655' auf jeweils einem Lagerbock gelagert sein. Dabei kann die Verstellbarkeit mittels eines hydraulischen, pneumatischen oder mechanischen Mechanismus vollzogen werden. Selbstverständlich ist eine Verstellbarkeit der Halterung auch bei den Varianten der Figuren 7a und 7b möglich, wobei hier nur die Halterung in einem rotierbaren Lagerbock gehalten werden muss.

Die Gleitlager 656 und 656' können beispielsweise als ebene Luftlagerpads ausgebildet sein. Dabei können sie mittels eines Kugelgelenks am Adapter 651 befestigt sein, so dass Fertigungstoleranzen ausgeglichen werden können.

In Figur 7e ist weiterhin erkennbar, dass die Lager 656 und 656' voneinander beabstandet sind. In dem in Figur 7e dargestellten Ausführungsbeispiel befinden sich auf der Gleitplatte. 655' zwei Lager, von denen in der Figur eines durch das eingezeichnete Lager 656' verdeckt ist. Aufgrund dieser Anordnung ist es möglich, den Prüfling 660 drehmomentfrei auf dem Adapter 651 zu halten und um die Pendelachse 654 zu pendeln.

In Figur 7f ist eine der Figur 7e vergleichbare Variante eines Schwerependels dargestellt. Der Unterschied zwischen dem Schwerependel 670 und dem Schwerependel 650 besteht darin, dass zur Lagerung des Adapters 671 auf der Halterung 672 ein Messerlager 673 vorgesehen ist.

Eine weitere Ausführungsform eines Schwerependels 700 ist in den Figuren 8 dargestellt. Das Schwerependelsystem 700 umfasst einen Adapter 710, welches zum einen auf einem sphärischen Luftlager 721 und auf einem, auf einer beweglichen (um die X Achse rotierbaren) Ebene 722 angeordneten ebenen Luftlager 723 beweglich angeordnet ist. Das ebene Luftlager kann auf der Ebene 722 entlang einer kreisförmigen Trajektorie um die Pendelachse frei schwingen, wobei das sphärische Lager 721 diese Bewegung reibungsarm erlaubt. Die Pendelachse 717 wird durch die Neigung der Ebene 722 bestimmt, wobei der Winkel α zwischen der Horizontalen und der Pendelachse 717 definiert ist. Die Ebene 722 steht in einem rechten Winkel zur Pendelachse.

In den Figuren 8a und 8b ist dargestellt, wie unterschiedliche Pendelachsen 717 bzw. 717' eingestellt werden können. Durch Änderung des Winkels der Ebene 722, wie in der Figur 7b dargestellt, ändert sich auch die Pendelachse 717' und diese steht nun unter einem Winkel α' zur Horizontalen, und senkrecht zur Ebene 722. Auf diese Weise kann durch unterschiedliche Winkeleinstellungen der beweglichen Ebene 722 eine Vielzahl von Pendelachse eingestellt werden. Zusätzlich kann das Objekt noch auf dem Adapter 710 gedreht werden, so dass in einer Winkeleinstellung mehrere Trägheitseigenschaftskomponenten messbar sind.

Bei den in den Figuren 7 und 8 dargestellten Adaptern handelt es sich um Adapter, welche einen Pendelmechanismus umfassen der gänzlich unterhalb der Oberkante des Adapters 710 angeordnet ist. Auf diese Weise können Objekte vermessen werden, welche größer sind als die Ausmaße des Adapters 710. Auf diese Weise wird ein kleines Messsystem zur Verfügung gestellt, mit welchem jedoch auch große Objekte vermessbar sind.

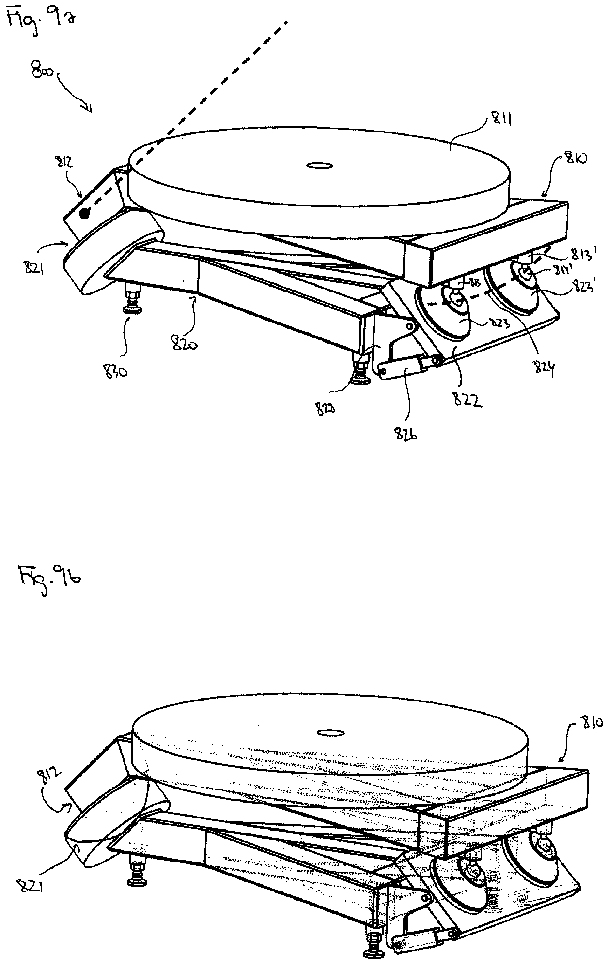

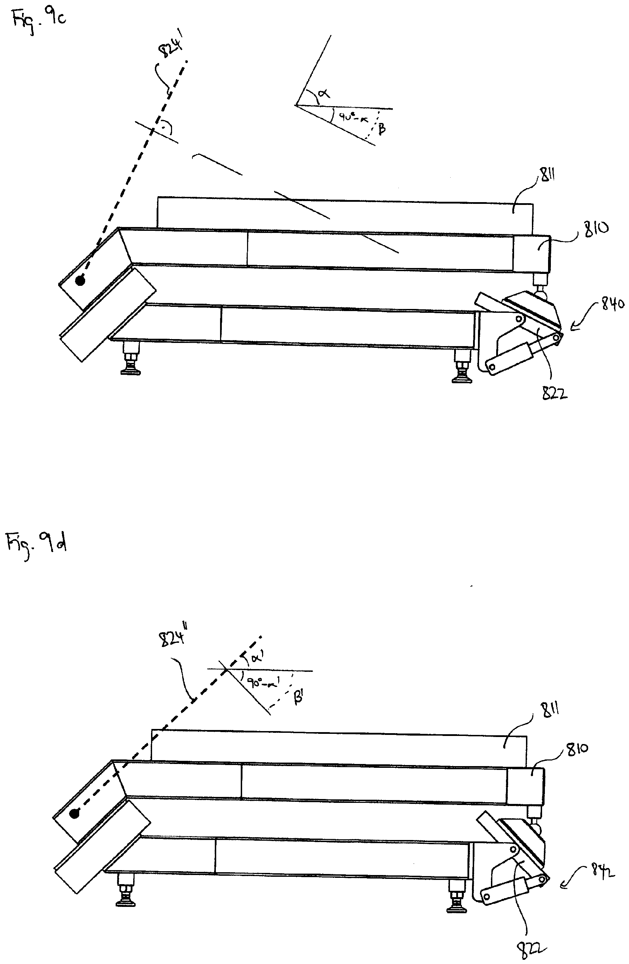

Anhand der Figuren 9 soll ein detaillierteres Ausführungsbeispiel eines Schwerependels erläutert werden. Das Schwerependel 800 umfasst einen Adapter 810 mit einem auf dem Adapter drehbar gelagerten Träger 811. Der Adapter 810 ist hierbei eine Metallkonstruktion aus Hohlträgern, die in Figur 9b, bei der die einzelnen Komponenten semitransparent dargestellt sind, näher erkennbar ist. Der Adapter 810 umfasst einen Fortsatz 812, an dem eins Kugelkalotte eines sphärischen Lagers gekoppelt ist, das im Gestell 820 in einer Kugelpfanne gehalten ist. Auch das Gestell ist eine Metallrahmenkonstruktion aus Hohlelementen. Es sind jedoch auch andere Werkstoffe möglich, wie beispielsweise Verbundwerkstoffe, wie glasfaserverstärkte Kunststoffe, oder ähnlich steife Werkstoffe.

Dem in Figur 9a dargestellten Träger 811 (wie auch den anderen Trägern der Fign. 7 bis 11) kommt die Bedeutung einer Messplattform zu, auf der ein Prüfling angeordnet werden kann. Anhand der Figur 9a ist deutlich erkennbar, dass der gesamte Aufbau des Schwerependels unterhalb der Messplattform angeordnet ist. Neben der Halterung 821, die im vorliegenden Ausführungsbeispiel und in Figur 9b näher erkennbar als Kugelpfanne ausgebildet ist, umfasst das Gestell 820 eine Gleitplatte 822, die eben ausgebildet ist. Am Adapter 810 befinden sich Fortsätze 813 und 813' mit einem Kugelkopf 814 bzw. 814', in denen ein Gleitlager 823 bzw. 823' gehalten ist. Die Gleitlager 823 bzw. 823' können dabei auf der Gleitplatte 822 gleiten. Aufgrund der eingestellten Neigung der Gleitplatte 822 wird eine Pendelachse 824 definiert, die im rechten Winkel zur Neigung der Gleitplatte 822 steht. Wird nun das Schwerependel bzw. der Träger oder der Adapter angestoßen, pendelt ein auf dem Träger 811 angeordneter Prüfling um die Pendelachse 824, so dass die Gleitlager 823 eine der Trajektorie 825 folgende Pendelbewegung ausführen. Mittels einer geeigneten und in diesem Ausführungsbeispiel nicht näher eingezeichneten Auswerteelektronik kann das Frequenzspektrum der Schwingung bestimmt werden. Aus den Frequenzmessungen können dann die Trägheitseigenschaften des zu vermessenen Prüflings ermittelt werden. Um die Neigung der Gleitplatte 822 zu verändern, kann diese mittels eines mechanischen Gestänges 826 um den Lagerblock 828 gedreht werden.

Dies sei anhand der Figuren 9c und 9d näher erläutert. In Figur 9c ist eine Neigung 840 der Gleitplatte 822 dargestellt. Die Neigung entspricht gegenüber der Horizontalen dem Winkel β. Aufgrund der gewählten Neigung 840 pendelt der Adapter 810 nun um die Pendelachse 824'. Wird nun, wie in Figur 9d gezeigt, eine geänderte Neigung 842 der Gleitplatte 822 gewählt, verändert sich die Pendelachse 824" zum Winkel α'. Obgleich in beiden Konfigurationen der Adapter 810 in der Ruhelage horizontal und eben ausgerichtet ist (beispielsweise durch Justierung der Füße 830, wie in Figur 9a gezeigt), pendelt der Adapter 810 um zwei verschiedene Pendelachsen 824' bzw. 824".

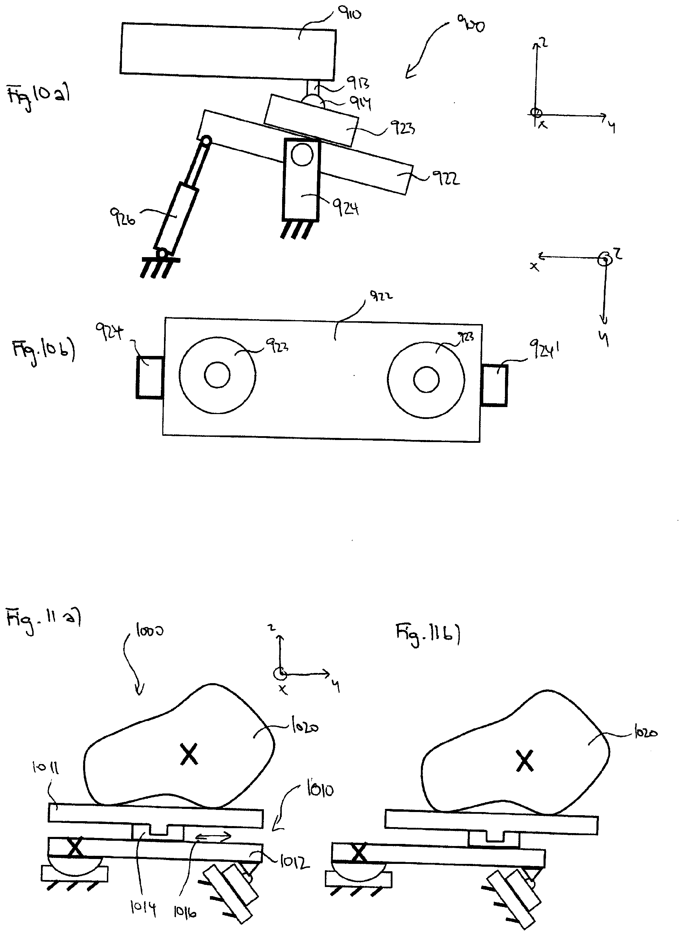

Anhand der Figuren 10 soll ein Ausführungsbeispiel eines Mechanismus zum Verstellen des Winkels der Ebene bzw. Gleitplatte vorgestellt werden. In Figur 10a ist ein Ausschnitt eines Schwerependels 900 dargestellt, das einen Adapter umfasst, der ähnlich wie in Figur 9a gezeigt Fortsätze 913 mit Kugeln 914 aufweist, in denen ein Gleitlager 923 gehalten wird. Die Gleitplatte 922, die beispielsweise aus einem polierten Metall besteht, wird in einem Lagerblock 924 rotierbar gehalten. Die Winkeleinstellung der Gleitplatte 922 kann mittels des Pneumatikzylinders 926 verändert werden. Nimmt der Hub des Zylinders zu, wird die Neigung der Gleitplatte 922 gegenüber der Horizontalen steiler. Nimmt der Hub des Zylinders ab, wird die Neigung der Gleitplatte 922 flacher. Selbstverständlich kann anstatt eines Pneumatikzylinders auch ein hydraulischer Zylinder mit einer Hydraulikflüssigkeit verwendet werden.

In Figur 10b ist eine Aufsicht auf die Gleitplatte und die darauf angeordneten Lagerpads dargestellt. Die Gleitplatte 922 wird im Lagerbock 924 bzw. dem gegenüberliegenden Lagerbock 924' gehalten. Die Lagerpads 923 und 923' sind gleitend auf der Gleitplatte 922 angeordnet. Die Schwingungsamplitude des Adapters kann klein gewählt werden, d. h. im Bereich weniger Zentimeter liegen.

Anhand der Figuren 11 soll ein weiteres Ausführungsbeispiel eines Schwerependels erläutert werden. Das in Figur 11a dargestellte Schwerependel 1000 umfasst einen Adapter 1010, der eine Basisplatte 1012 aufweist, die beispielsweise dem Adapter 810 des Ausführungsbeispiels der Figuren 9 entspricht. Auf dieser Basisplatte befindet sich ein Träger 1011, der als Messplattform eben ausgebildet ist, um einen Prüfling aufzunehmen. Der Träger 1011 ist über einen Dreh- und Verschiebemechanismus 1014 mit der Basisplatte 1012 verbunden. Der Träger 1011 kann dabei auf dem Dreh- und Verschiebemechanismus 1014 zum einen um die z-Achse gedreht werden und zum anderen entlang einer in der Richtung y verlaufenden Führungsschiene geführt werden, so dass der Trägerin der Richtung 1016 bewegt werden kann.

Ein Versatz in positiver y-Richtung ist beispielhaft in Figur 11b dargestellt. Es ist leicht verständlich, dass, obgleich die Pendelachse sich in den Figuren 11a und 11b nicht unterscheidet, verschiedene Raumachsen des Prüflings 1020 vermessen werden und so weitere Trägheitseigenschaften des Prüflings 1020 durch eine Messung in der Konfiguration der Figur 11b ermittelt werden können.

Weitere Ausführungsformen ergeben sich für den Fachmann aus den hier gemachten Offenbarungen. Hinsichtlich eines Verfahrens zur Bestimmung der Trägheits- bzw. Deviationsmomente aus den mit dem Schwerependel durchgeführten Messungen wird auf den Stand der Technik verwiesen. 1.

**Patentansprüche**

1. Schwerependel (600, 700) umfassend eine Halterung (620, 720) und einen Adapter (610, 710), welcher mindestens einen Träger zur Befestigung eines zu vermessenden Schwerekörpers umfasst, wobei die Halterung derart mit dem Adapter verbunden ist, dass der Adapter um eine Pendelachse (617, 717; 717') pendelbar ist,
**dadurch gekennzeichnet,**
**dass** der Adapter um mindestens eine, nicht horizontal oder vertikal verlaufende Pendelachse pendelbar ist.

2. Schwerependel nach einem der vorhergehenden Ansprüche, wobei eine Neigung der Pendelachse verstellbar ausgeführt ist.

3. Schwerependel nach einem der vorhergehenden Ansprüche, wobei die Pendelachse derart einstellbar ist, dass ein Schwerpunkt eines zu vermessenden Objekts unterhalb der Pendelachse liegt.

4. Schwerependel nach einem der vorhergehenden Ansprüche, wobei der Adapter über eine Achse mit der Halterung verbunden ist und die Achse die Pendelachse definiert.

5. Schwerependel nach einem der vorhergehenden Ansprüche, wobei der Adapter über ein sphärisches Lager, insbesondere ein sphärisches Luftlager, mit der Halterung verbunden ist.

6. Schwerependel nach Anspruch 5, wobei das Schwerependel mindestens ein weiteres Lager umfasst.

7. Schwerependel nach einem der vorhergehenden Ansprüche, wobei mindestens eine, um eine Raumachse rotierbare Ebene vorhanden ist.

8. Schwerependel nach Anspruch 7, wobei eine Winkeleinstellung der Ebene einstellbar, so dass verschiedene Winkeleinstellungen verschiedenen Pendelachsen definieren.

9. Schwerependel nach Anspruch 8, wobei die Ebene eine um die Raumachse rotierbare Gleitplatte umfasst und/oder die Winkeleinstellung mechanisch, hydraulisch, oder pneumatisch verstellbar ist.

10. Schwerependel nach einem der vorhergehenden Ansprüche, wobei der Träger gegenüber dem Adapter rotierbar und/oder verschiebbar angeordnet ist, so dass ein zu vermessendes Objekt auf dem Adapter gedreht werden kann.

11. Schwerependel nach einem der vorhergehenden Ansprüche, wobei ein Gestell vorhanden ist, auf welchem der Adapter pendelbar ist.

12. Verfahren zum Bestimmen eines Trägheitsmoments mittels eines Schwerependels mit einer Halterung und einem Adapter, welcher mindestens einen Träger umfasst, wobei der Adapter nacheinander um mindestens zwei, nichtparallel verlaufende Pendelachsen gependelt wird, wobei mindestens eine Pendelachse nicht horizontal oder vertikal verläuft.

13. Schwerependel (1) nach einem der Ansprüche 1 bis 11, wobei

- die Halterung einen Halteträger (11) und mindestens zwei Auflageflächen (21, 22), und
- der Adapter (10) mindestens zwei am Träger angeordnete Auflagekörper (14, 15) umfasst, und die Auflageflächen oder die Auflagekörper Ellipsoidkalotten aufweisen.

**14.** Schwerependel nach Anspruch 13, wobei die zwei Auflageflächen auf einer unterschiedlichen Höhe relativ zum Halteträger angeordnet sind.

**Claims**

**1.** A gravity pendulum (600, 700) comprising a holder (620, 720) and an adapter (610, 710) which comprises at least one carrier for fastening a gravity body to be measured, wherein the holder is connected to the adapter in a manner such that the adapter can be pendulated about a pendulum axis (617, 717, 717'),
**characterised in that**
the adapter can be pendulated about at least one pendulum axis which does not run horizontally or vertically.

**2.** A gravity pendulum according to one of the preceding claims, wherein an inclination of the pendulum axis is designed in an adjustable manner.

**3.** A gravity pendulum according to one of the preceding claims, wherein the pendulum axis can be set in a manner such that a centre of gravity of an object to be measured lies below the pendulum axis.

**4.** A gravity pendulum according to one of the preceding claims, wherein the adapter is connected to the holder via a pivot, and the pivot defines the pendulum axis.

**5.** A gravity pendulum according to one of the preceding claims, wherein the adapter is connected to the holder via a spherical bearing, in particular a spherical air bearing.

**6.** A gravity pendulum according to one of the preceding claims, wherein the gravity pendulum comprises at least one further bearing.

**7.** A gravity pendulum according to one of the preceding claims, wherein at least one plane rotatable about a spatial axis is present.

**8.** A gravity pendulum according to claim 7, wherein an angular setting of the plane can be set so that different angle settings define different pendulum axes.

**9.** A gravity pendulum according to claim 8, wherein the plane comprises a sliding plate which can be rotated about the spatial axis and/or the angular setting can be adjusted mechanically, hydraulically or pneumatically.

**10.** A gravity pendulum according to one of the preceding claims, wherein the carrier is arranged in a manner which is rotatable and/or displaceable with respect to the adapter, so that an object to be measured can be rotated on the adapter.

**11.** A gravity pendulum according to one of the preceding claims, wherein a mount is present, on which the adapter can be pendulated.

**12.** A method for determining a moment of inertia by way of a gravity pendulum with a holder and an adapter comprising at least one carrier, wherein the adapter is pendulated successively about at least two pendulum axes which do not run parallel, wherein at least one of the pendulum axes does not run horizontally or vertically.

**13.** A gravity pendulum (1) according to one of claims 1 - 11, wherein

- the holder comprises a holding carrier (11) and at least two contact surfaces (21, 22), and
- the adapter (10) comprises at least two contact bodies (14, 15) arranged on the carrier, wherein the contact surfaces or the contact bodies comprise ellipsoidal caps.

**14.** A gravity pendulum according to claim 13, wherein the two contact surfaces are arranged at a different height relative to the holding carrier.

**Revendications**

1. Pendule pesant (600, 700) comprenant un système de retenue (620, 720) et un adaptateur (610, 710), lequel comprend au moins un support pour la fixation d'un corps pesant à mesurer, où le système de retenue est relié de telle manière avec l'adaptateur que l'adaptateur peut osciller autour d'un axe de pendule (617, 717 ; 717'),
**caractérisé en ce**
**que** l'adaptateur peut osciller autour d'au moins un axe de pendule s'étendant de manière non horizontale ou verticale.

2. Pendule pesant selon l'une des revendications précédentes, dans lequel une inclinaison de l'axe de pendule est conçue réglable.

3. Pendule pesant selon l'une des revendications précédentes, dans lequel l'axe de pendule est réglable de telle manière qu'un centre de gravité d'un objet à mesurer se situe en dessous de l'axe de pendule.

4. Pendule pesant selon l'une des revendications précédentes, dans lequel l'adaptateur est relié avec le système de retenue par le biais d'un axe et l'axe définit l'axe de pendule.

5. Pendule pesant selon l'une des revendications précédentes, dans lequel l'adaptateur est relié avec le système de retenue par le biais d'un palier sphérique, notamment un palier sphérique pneumatique.

6. Pendule pesant selon la revendication 5, dans lequel le pendule pesant comprend au moins un autre palier.

7. Pendule pesant selon l'une des revendications précédentes, dans lequel il y a au moins un plan pouvant être mis en rotation autour d'un axe spatial.

8. Pendule pesant selon la revendication 7, dans lequel un réglage angulaire du plan peut être ajusté de sorte que différents réglages angulaires définissent différents axes de pendule.

9. Pendule pesant selon la revendication 8, dans lequel le plan comprend une plaque de glissement pouvant être en rotation autour de l'axe spatial, et/ou le réglage angulaire peut être ajusté mécaniquement, de manière hydraulique ou pneumatique.

10. Pendule pesant selon l'une des revendications précédentes, dans lequel le support est disposé en pouvant être mis en rotation et/ou être déplacé par rapport à l'adaptateur de sorte qu'un objet à mesurer peut être tourné sur l'adaptateur.

11. Pendule pesant selon l'une des revendications précédentes, dans lequel il y a un châssis sur lequel l'adaptateur peut osciller.

12. Procédé de détermination d'un moment d'inertie au moyen d'un pendule pesant doté d'un système de retenue et d'un adaptateur, lequel comprend au moins un support, où l'adaptateur est mis en oscillation autour d'au moins deux axes de pendule s'étendant non parallèlement l'un après l'autre, où au moins un axe de pendule ne s'étend pas horizontalement ou verticalement.

13. Pendule pesant (1) selon l'une des revendications 1 à 11, dans lequel

   - le système de retenue comprend un support de retenue (11) et au moins deux surfaces d'appui (21, 22) et
   - l'adaptateur (10) comprend au moins deux corps d'appui (14, 15) disposés sur le support, et les surfaces d'appui ou les corps d'appui présentent des calottes ellipsoïdes.

14. Pendule pesant selon la revendication 13, dans lequel les deux surfaces d'appui sont disposées à une hauteur différente par rapport au support de retenue.

Fig. 1 a)

Fig. 1b)

Fig. 2a

Fig. 2c

Fig. 2d

Fig. 2b

Fig.3a

Fig.3b

Fig.4a

Fig.4b

Fig.4c

Fig.4d

Fig.4e

420

421

416

422

416"

400

416'

414

411

Z

Y

X

Fig. 5

Fig.6 a

Fig.6 b

Fig.7a

Fig.7b

Fig.7c

621
622'
620
622
611
610

Fig.7d

623'
621
620
623
624
625
626
611
610

Fig.7e)

z
y
x

650
654
653
656
655
656'
655'
652
651
α

Fig. 7f

Fig. 8a

Fig. 8b

Fig. 9a

800

811

810

812

813'
814'
823'

813

821

820

823

830

820

824

822

826

Fig. 9b

810

812

821

Fig. 9c

Fig. 9d

Fig (10 a)

910

900

913
914
923

922

926

924

Fig.(10 b)

924

922

923

923

9241

Fig. 11 a)

1000

1020

1011

X

1010

1012

1014   1016

Fig. 11 b)

1020

X

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5309753 A
- DE 29622132 U1
- EP 0303523 A1
- DE 4133376 A1
- DE 102013208863

**In der Beschreibung aufgeführte Nicht-Patentliteratur**

- **BUYANOV.** A device for measuring the inertia tensor of a rigid body. *measurement techniques,* 01. Juni 1991, vol. 34 (6), 585-589